# FASCICULE DE BREVET EUROPEEN

(11) **EP 4 207 399 B1**
(45) Date de publication et mention de la délivrance du brevet: **07.05.2025**
(21) Numéro de dépôt: 22216841.1
(22) Date de dépôt: 27.12.2022
(51) Int. Cl.: H01M 8/04029, H01M 8/04228

(54) **SYSTEME ELECTROCHIMIQUE COMPORTANT UN REACTEUR ELECTROCHIMIQUE, UN DISPOSITIF DE REGULATION THERMIQUE ET UN DISPOSITIF D'INERTAGE**
ELEKTROCHEMISCHES SYSTEM MIT EINEM ELEKTROCHEMISCHEN REAKTOR, EINER THERMISCHEN REGELUNGSVORRICHTUNG UND EINER INERTISIERUNGSVORRICHTUNG
ELECTROCHEMICAL SYSTEM COMPRISING AN ELECTROCHEMICAL REACTOR, A THERMAL CONTROL DEVICE AND AN INERTING DEVICE

(30) Priorité: 03.01.2022 FR 2200024
(43) Date de publication de la demande: 05.07.2023
(73) Titulaire: Commissariat à l'Energie Atomique et aux Energies Alternatives, 75015 Paris (FR)
(72) Inventeur: PINTON, Éric, 38054 GRENOBLE Cedex 09 (FR); MORIN, Benoît, 38054 GRENOBLE Cedex 09 (FR)
(74) Mandataire: INNOV-GROUP

(56) Documents cités:
- JP-A- 2002 063 921
- JP-A- 2003 105 577
- JP-A- 2008 004 468
- JP-B2- 4 486 173

## Description

### DOMAINE TECHNIQUE

Le domaine de l'invention est celui des systèmes électrochimiques comportant un réacteur électrochimique, par exemple une pile à combustible à membrane échangeuse de protons, et un dispositif fluidique de régulation thermique par circulation d'un liquide caloporteur dans l'empilement de cellules électrochimiques.

### ÉTAT DE LA TECHNIQUE ANTÉRIEURE

Un réacteur électrochimique tel qu'une pile à combustible à membrane échangeuse de protons (PEM en anglais, pour *Proton Exchange Membrane*) comporte habituellement un empilement de cellules électrochimiques qui comprennent chacune une anode et une cathode séparées électriquement l'une de l'autre par un électrolyte, dans laquelle a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène par exemple contenu dans de l'air) est amené au contact de la cathode. La réaction électrochimique est subdivisée en deux demi-réactions, l'une d'oxydation et l'autre de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte contenu dans une membrane polymère, et un conducteur électronique formé par le circuit électrique externe. L'empilement de cellules est ainsi le lieu de la réaction électrochimique : les réactifs y sont apportés, les produits et les espèces non réactives en sont évacués ainsi que la chaleur produite lors de la réaction.

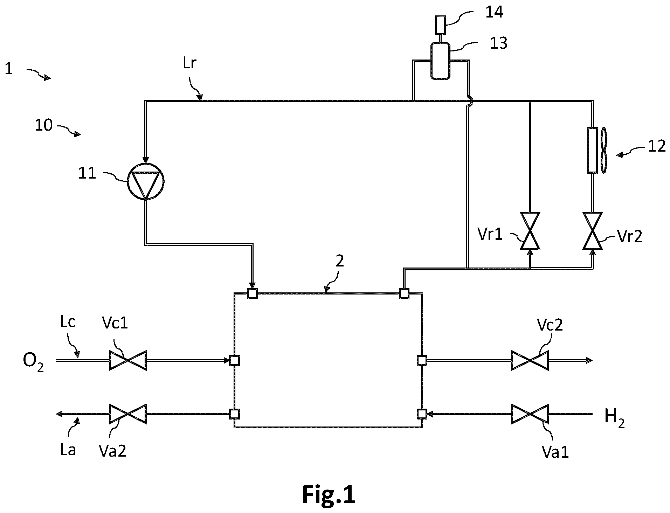

Habituellement, la pile à combustible est associée à un dispositif fluidique de régulation thermique adapté à évacuer la chaleur produite lors des réactions électrochimiques. A ce titre, la figure 1 illustre, de manière partielle et schématique, un exemple de système électrochimique 1 comportant une pile à combustible 2 et un dispositif fluidique de régulation thermique 10. Ce dernier comporte une ligne fluidique de circulation Lr du liquide caloporteur raccordée à un circuit de refroidissement (non représenté) situé dans la pile à combustible 2. Il comporte également une pompe 11 pour assurer la circulation du liquide caloporteur, ainsi qu'un échangeur de chaleur 12 permettant de refroidir le liquide caloporteur en sortie de la pile à combustible 2. Par ailleurs, la pile à combustible 2 est raccordée à une ligne fluidique cathodique Lc pour l'apport d'oxygène (oxygène pur ou air) d'une part, et à une ligne fluidique anodique La pour l'apport d'hydrogène d'autre part. Différentes vannes peuvent être présentes.

Il est connu que l'arrêt de la pile à combustible 2 est associé à différentes problématiques. Ainsi, on peut souhaiter éviter, pour des raisons de sécurité, que de l'hydrogène reste présent à l'anode de la pile à combustible. Par ailleurs, lorsque de l'air est situé dans la pile à combustible à l'arrêt, l'injection d'hydrogène à l'anode peut engendrer une réaction électrochimique conduisant à des dégradations de la cathode. Enfin, le stockage de la pile à combustible dans des conditions de basses températures peut provoquer la solidification au moins partielle de l'eau liquide contenue dans la membrane électrolytique, et donc la formation de cristaux de glace à sa surface. Ces cristaux peuvent induire des dégradations irréversibles de la membrane électrolytique, et peuvent également réduire les performances de la pile à combustible lors de son démarrage. Des problématiques similaires sont également présentes dans d'autres types de réacteurs électrochimiques tels que les électrolyseurs de type PEM, les piles à combustible à oxyde solide (SOFC, pour *Solid Oxide Fuel Cell,* en anglais), etc...

Les documents JP2008004468A, JP4486173B2, JP2003105577A et JP2002063921A décrivent des systèmes de pile à combustible dans lesquels une aspiration du fluide circulant dans les lignes anodiques et/ou cathodiques est obtenue à l'aide de trompes à eau reliées à la ligne de circulation de fluide caloporteur.

### EXPOSÉ DE L'INVENTION

L'invention a pour objectif de proposer un système électrochimique à pile à combustible de type PEM comportant un dispositif fluidique d'inertage permettant de retirer de manière simple et efficace au moins l'un des fluides réactifs du réacteur électrochimique, et ainsi d'éviter au moins en partie les inconvénients et dégradations mentionnés précédemment.

Pour cela, l'objet de l'invention est un système électrochimique comportant : un réacteur électrochimique comportant un circuit de distribution cathodique, un circuit de distribution anodique et un circuit de refroidissement; une ligne fluidique cathodique de circulation d'un premier fluide réactif, raccordée à une entrée et à une sortie du circuit de distribution cathodique ; et une ligne fluidique anodique de circulation d'un deuxième fluide réactif, raccordée à une entrée et à une sortie du circuit de distribution anodique. Le système électrochimique comporte également un dispositif de régulation thermique comprenant : une ligne fluidique de circulation d'un liquide caloporteur, raccordée à une entrée et à une sortie du circuit de refroidissement ; et une pompe et un échangeur de chaleur, situés sur la ligne fluidique de circulation.

Selon l'invention, le système électrochimique comporte également un dispositif d'inertage d'au moins l'un des fluides réactifs, comportant : une trompe à eau, comportant une entrée principale et une sortie raccordées à la ligne fluidique de circulation, et une entrée secondaire raccordée à la ligne fluidique cathodique et/ou à la ligne fluidique anodique ; et au moins une vanne d'activation, située en amont de l'entrée secondaire, de sorte que, lors de l'ouverture de la vanne d'activation, la circulation du liquide caloporteur dans la ligne fluidique de circulation provoque l'aspiration du fluide réactif hors de la ligne fluidique considérée et donc hors du réacteur électrochimique.

Selon l'invention, la ligne fluidique cathodique comporte un conduit amont raccordé à l'entrée du circuit de distribution cathodique et muni d'une vanne amont, et un conduit aval raccordé à la sortie du circuit de distribution cathodique et muni d'une vanne aval, l'entrée secondaire de la trompe à eau étant raccordée au conduit amont ou au conduit aval par un conduit muni d'une vanne d'activation; et/ou la
ligne fluidique anodique peut comporter un conduit amont raccordé à l'entrée du circuit de distribution anodique et muni d'une vanne amont, et un conduit aval raccordé à la sortie du circuit de distribution anodique et muni d'une vanne aval, l'entrée secondaire de la trompe à eau étant raccordée au conduit amont ou au conduit aval par un conduit muni d'une vanne d'activation. Certains aspects préférés mais non limitatifs de ce système électrochimique sont les suivants.

La sortie de la trompe à eau peut être raccordée à l'entrée ou à la sortie du circuit de refroidissement.

La ligne fluidique de circulation peut comporter un premier conduit et un deuxième conduit en parallèle l'un de l'autre et raccordés à la pompe, la trompe à eau étant situé sur le premier conduit, et le deuxième conduit étant raccordé à l'entrée du circuit de refroidissement, les premier et deuxième conduits étant munis d'au moins une vanne adaptée à assurer l'écoulement du liquide caloporteur dans le deuxième conduit lors d'une phase de fonctionnement du réacteur électrochimique, et dans le premier conduit lors d'une phase d'inertage.

Le système électrochimique peut comporter un évent raccordé à la ligne fluidique de circulation autorisant le dégazage du fluide présent dans la ligne fluidique de circulation.

La ligne fluidique de refroidissement peut comporter un conduit de dérivation en parallèle à l'échangeur de chaleur associé à au moins une vanne adaptée à assurer l'écoulement du liquide caloporteur dans l'échangeur de chaleur lors d'une phase de fonctionnement du réacteur électrochimique, et l'écoulement du liquide caloporteur dans le conduit de dérivation lors d'une phase d'inertage.

Le réacteur électrochimique peut être de type à membrane échangeuse de protons.

Le réacteur électrochimique peut être une pile à combustible.

Les fluides réactifs peuvent être des gaz.

L'invention porte également sur un procédé d'utilisation du système électrochimique selon l'invention, comportant une phase de fonctionnement du réacteur électrochimique dans laquelle la vanne d'activation est fermée, et une phase d'inertage dans laquelle la vanne d'activation est ouverte.

Lors de la phase d'inertage, les vannes de la ligne fluidique cathodique peuvent être fermées.

Lors de la phase d'inertage, les vannes de la ligne fluidique anodique peuvent être fermées.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique et partielle d'un système électrochimique comportant un réacteur électrochimique (ici une pile à combustible de type PEM) et un dispositif fluidique de régulation thermique, selon un exemple de l'art antérieur;

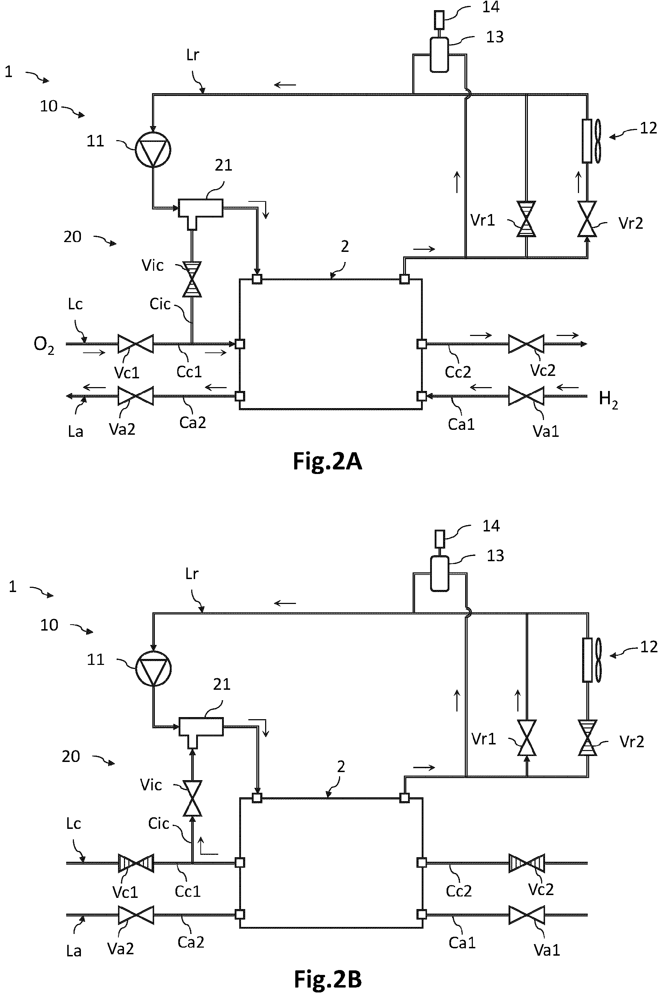

les figures 2A et 2B sont des vues schématiques et partielles d'un système électrochimique selon un mode de réalisation, comportant un dispositif fluidique d'inertage adapté à retirer le fluide réactif situé dans le circuit de distribution cathodique, lors d'une phase de fonctionnement d'un réacteur électrochimique (ici une pile à combustible de type PEM) (fig.2A) et lors d'une phase d'inertage (fig.2B) ;

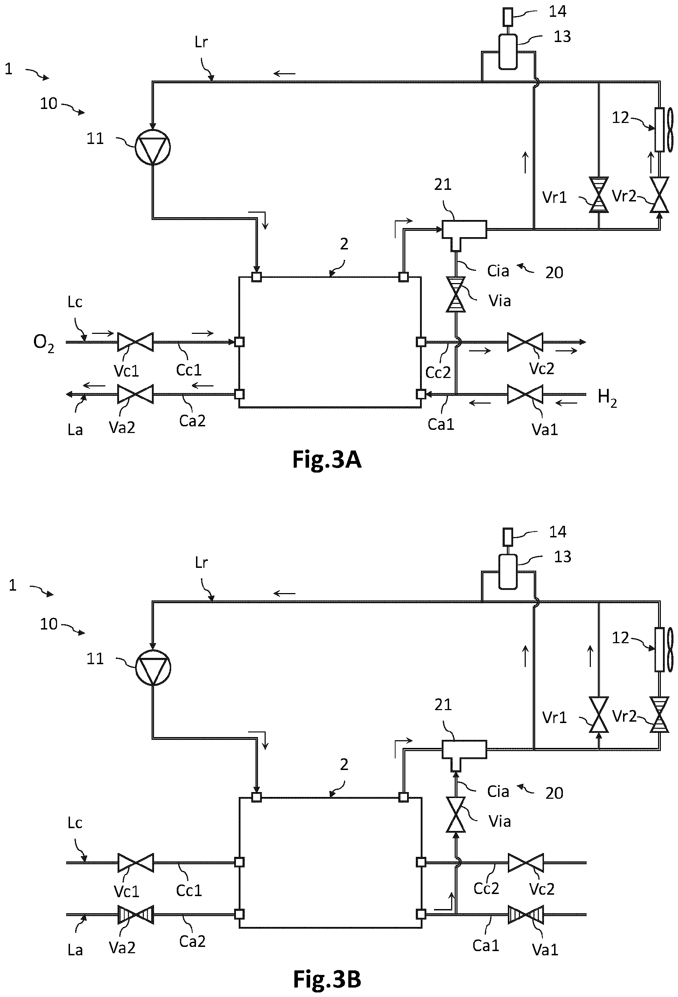

les figures 3A et 3B sont des vues schématiques et partielles d'un système électrochimique selon une variante de réalisation, lors d'une phase de fonctionnement du réacteur électrochimique (fig.3A) et lors d'une phase d'inertage (fig.3B), où le dispositif fluidique d'inertage est adapté, lors de la phase d'inertage, à retirer le fluide réactif situé dans le circuit de distribution anodique ;

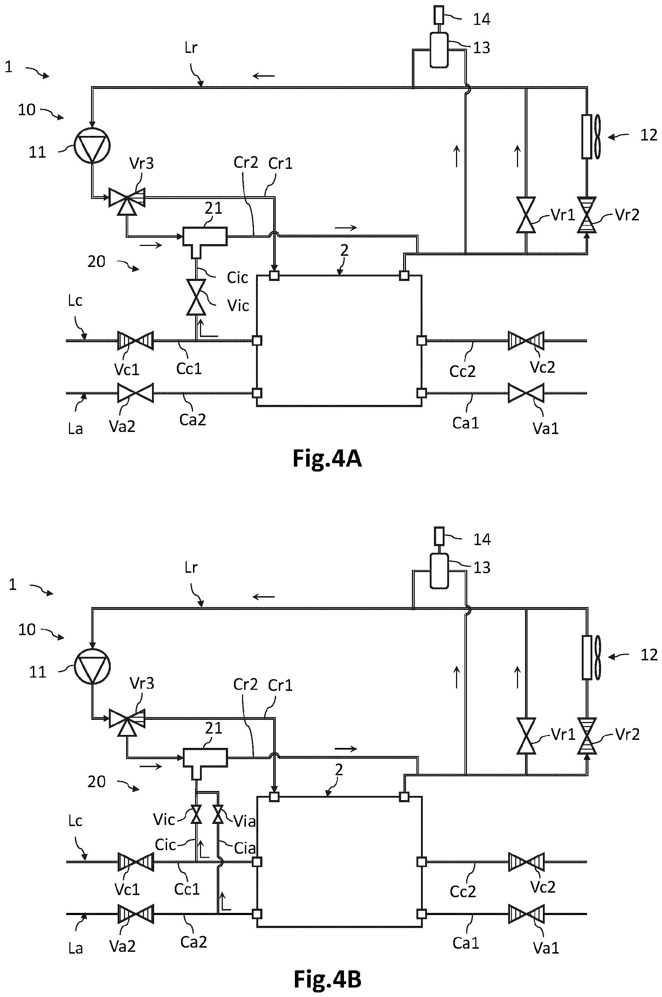

la figure 4A est une vue schématique et partielle d'un système électrochimique selon une autre variante de réalisation, ici lors d'une phase d'inertage du réacteur électrochimique où celui-ci est court-circuité fluidiquement, et où, lors d'une phase de fonctionnement du réacteur électrochimique, la trompe à eau est court-circuitée fluidiquement ;
la figure 4B est une vue schématique et partielle d'un système électrochimique selon une autre variante de réalisation, ici lors d'une phase d'inertage du réacteur électrochimique, dans lequel le dispositif fluidique d'inertage est adapté à retirer les fluides réactifs situés dans les circuits de distribution cathodique et anodique ;

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

Les figures 2A et 2B sont des vues schématiques et partielles d'un système électrochimique 1 selon un mode de réalisation, lorsque le réacteur électrochimique 2 est en fonctionnement (fig.2A) et lorsqu'il est à l'arrêt et en cours d'inertage (fig.2B).

D'une manière générale, le système électrochimique 1 comporte, *a minima,* réacteur électrochimique 2 à membrane échangeuse de protons, un dispositif fluidique de régulation thermique 10 de la pile à combustible, et un dispositif fluidique d'inertage 20 de la pile à combustible.

Le dispositif fluidique d'inertage 20 permet de retirer au moins en partie l'un et/ou l'autre des deux fluides réactifs présents dans le réacteur électrochimique 2 lors de son arrêt. Il s'agit en particulier de diminuer la concentration du ou des fluides réactifs concernés situés dans les circuits de distribution anodique et/ou cathodique du réacteur électrochimique 2. Comme détaillé par la suite, l'inertage est effectué en tirant profit de la circulation du liquide caloporteur du dispositif fluidique de régulation thermique 10. A ce titre, le dispositif fluidique d'inertage 20 comporte en particulier une trompe à eau 21 raccordée à la ligne fluidique de circulation Lr du liquide caloporteur et au moins une vanne d'activation Vic, Via décrite plus loin.

Le réacteur électrochimique 2 peut être une pile à combustible ou un électrolyseur à membrane échangeuse de protons (PEM), une pile à combustible à oxyde solide (SOFC) par exemple en cogénération et donc avec présence d'un fluide caloporteur participant à la régulation thermique du système. Les fluides réactifs injectés dans le réacteur électrochimique 2 peuvent être en phase gazeuse ou en phase liquide, selon le type du réacteur électrochimique.

Dans la suite de la description, on considèrera une pile à combustible 2 alimentée en hydrogène côté anode (gaz réactif carburant) et en oxygène ou en air côté cathode (gaz réactif comburant). L'invention s'applique également aux piles à combustible à méthanol direct, où le méthanol n'est pas reformé mais est directement injecté à l'anode de la pile à combustible. Ainsi, les fluides réactifs considérés ne sont pas nécessairement de nature gazeuse, bien que cela soit le cas préférentiel décrit ici.

La pile à combustible 2 comporte au moins une cellule électrochimique, et ici un empilement de cellules électrochimiques (non représentées). Chaque cellule comporte une anode et une cathode séparées l'une de l'autre par une membrane électrolytique échangeuse de protons, cet ensemble formant un assemblage membrane électrodes (AME). L'anode, la cathode et la membrane sont des éléments classiques connus de l'homme du métier et ne sont pas décrites plus en détail.

Chaque assemblage est séparé de celui des cellules adjacentes par des plaques bipolaires, lesquelles sont adaptées à amener les gaz réactifs à l'anode et à la cathode des cellules, à évacuer notamment les produits issus des réactions électrochimiques, et à transmettre le courant électrique entre les cellules. Elles assurent également la circulation d'un liquide caloporteur entre les cellules de manière à évacuer la chaleur produite. Le liquide caloporteur peut être de l'eau, de l'huile, ou tout autre liquide adapté.

La pile à combustible 2 comporte donc un circuit de distribution anodique assurant l'apport du gaz réactif combustible (ici H₂) au côté anodique des cellules électrochimiques et l'évacuation fluidique ; un circuit de distribution cathodique assurant l'apport du gaz réactif comburant (ici de l'air) au côté cathodique des cellules électrochimiques et l'évacuation fluidique ; et un circuit de refroidissement assurant l'écoulement du liquide caloporteur. Ces circuits s'étendent notamment au niveau des plaques bipolaires.

Le système électrochimique 1 comporte une ligne fluidique anodique La, raccordée à l'entrée et à la sortie du circuit de distribution anodique de la pile à combustible 2, assurant l'apport de l'hydrogène à partir d'une source d'hydrogène (non représentée) et assurant l'évacuation fluidique. De même, il comporte une ligne fluidique cathodique Lc, raccordée à l'entrée et à la sortie du circuit de distribution cathodique, assurant l'apport de l'air et l'évacuation fluidique.

Le système électrochimique 1 comporte également un dispositif fluidique de régulation thermique 10 adapté à évacuer la chaleur produite par les réactions électrochimiques au sein de la pile à combustible 2. Celui-ci comporte une ligne fluidique de circulation Lr d'un liquide caloporteur, laquelle est raccordée à l'entrée et à la sortie du circuit de refroidissement. Cette ligne fluidique Lr est ici une ligne fluidique fermée.

Une pompe 11 de mise en circulation est raccordée à cette ligne fluidique Lr ainsi qu'un échangeur de chaleur 12. Ainsi, lors du fonctionnement de la pile à combustible 2, la pompe 11 assure l'écoulement du liquide caloporteur dans la ligne fluidique de circulation Lr et dans le circuit de refroidissement. Le liquide caloporteur ressort de la pile à combustible 2 avec une température supérieure à sa température d'entrée, et est ensuite refroidi par l'échangeur de chaleur 12 avant d'être réintroduit dans la pile à combustible 2. Il permet ainsi de refroidir la pile à combustible 2. La pompe 11 peut comporter un variateur de vitesse pour ajuster le débit du liquide caloporteur.

Le système électrochimique 1 comporte également un dispositif fluidique d'inertage 20 adapté à retirer au moins l'un des gaz réactifs de la pile à combustible 2 lors de son arrêt. Il présente une configuration structurelle simplifiée dans la mesure où l'inertage est effectué en tirant profit de la circulation du liquide caloporteur dans la ligne fluidique Lr.

Dans cet exemple, l'inertage revient à retirer l'air présent dans le circuit de distribution cathodique de la pile à combustible 2. Comme décrit plus loin, il peut également consister à retirer l'hydrogène du circuit de distribution anodique. Le terme retirer est à comprendre au sens large : le dispositif d'inertage diminue fortement la concentration du gaz réactif considéré et provoque la mise sous vide du circuit de distribution en question. D'une manière générale, le dispositif fluidique d'inertage 20 est raccordé à l'une et/ou l'autre des lignes fluidiques La, Lc, peu importe que ce soit en amont ou en aval du réacteur électrochimique 2. Ainsi, sur les fig.2A et 2B, il est raccordé à la ligne fluidique cathodique Lc en amont de la pile 2 mais il pourrait être raccordé en aval de celle-ci. De même, sur les fig.3A et 3B, il est raccordé à la ligne fluidique anodique La en amont de la pile 2 mais il pourrait être raccordé en aval de celle-ci.

Le dispositif fluidique d'inertage 20 comporte une trompe à eau 21 raccordée à la ligne fluidique Lr du liquide caloporteur. Une trompe à eau 21 est un éjecteur dont le fluide moteur est un liquide, ici le liquide caloporteur, et dont le fluide aspiré est ici l'un et/ou l'autre des gaz réactifs (ici l'air situé à la cathode).

La trompe à eau 21 comporte une entrée principale et une sortie raccordées à la ligne fluidique Lr. Il comporte également une entrée secondaire raccordée ici à la ligne fluidique Lc. Aussi, le liquide caloporteur injecté à l'entrée principale forme le liquide moteur, et le gaz réactif cathodique (l'air) forme le fluide aspiré. Le liquide caloporteur, par son débit, provoque par effet Venturi l'aspiration de l'air situé à la cathode de la pile à combustible 2, qui se mélange avec le liquide caloporteur avant d'être réinjecté dans la ligne fluidique Lr. Dans le cas où la pompe 11 comporte le variateur de vitesse, il est possible d'ajuster le débit du liquide caloporteur, et donc celui du gaz réactif aspiré.

Dans cet exemple, la ligne fluidique cathodique Lc comporte deux vannes Vc1, Vc2 situées respectivement en amont et en aval du circuit de distribution cathodique de la pile à combustible 2. L'entrée secondaire de la trompe à eau est raccordée au conduit Cc1 par un conduit Cic dont le point de raccord est situé entre la vanne Vc1 et l'entrée du circuit de distribution cathodique. Une vanne d'activation Vic est située sur le conduit Cic en amont de l'entrée secondaire. Comme indiqué plus loin, le conduit Cic peut être raccordé au conduit Cc2 et non pas comme ici au conduit Cc1.

Par ailleurs, la ligne fluidique anodique La comporte ici également deux vannes Va1, Va2 situées respectivement en amont et en aval du circuit de distribution anodique de la pile à combustible 2. De plus, la ligne fluidique Lr comporte une vanne Vr1 située dans un conduit de dérivation situé en parallèle de l'échangeur de chaleur 12, ainsi qu'une vanne Vr2 située en amont de l'échangeur de chaleur 12 et en parallèle avec la vanne Vr1. Les deux vannes Vr1 et Vr2 peuvent bien entendu être remplacées par une vanne trois voies. Un vase d'expansion 13 est raccordé sur la ligne fluidique de circulation Lr en parallèle avec l'échangeur de chaleur 12 ainsi qu'avec la vanne Vr1, par le biais de conduits à faible débit (quelques pourcents du flux). Un évent 14 est ici raccordé au vase d'expansion 13 de manière à permettre une évacuation du gaz éventuellement présent (dégazage). Bien entendu, cette configuration est ici donnée à titre d'exemple, et d'autres configurations sont possibles avec des éléments fluidiques en plus ou en moins.

Lorsque la pile à combustible 2 est en fonctionnement (cf. fig.2A), les vannes Va1, Va2 et les vannes Vc1, Vc2 sont ouvertes. De l'hydrogène est injecté dans le circuit de distribution anodique, et de l'air est injecté dans le circuit de distribution cathodique. La pompe 11 est activée et assure l'écoulement du liquide caloporteur dans la ligne fluidique Lr et dans le circuit de refroidissement de la pile à combustible 2. La Vanne Vr1 est fermée et la vanne Vr2 est ouverte, de sorte que le liquide caloporteur passe par l'échangeur de chaleur 12. Enfin, la vanne Vic est fermée, de sorte que le dispositif d'inertage reste inactif. Notons que la fig.2A illustre ici une phase de fonctionnement 'stabilisé' de la pile à combustible 2 (hors phase de démarrage). Rappelons également que les vannes Vr1 et Vr2 peuvent bien entendu être remplacée par une vanne 3 voies.

En revanche, lorsque la pile à combustible 2 est à l'arrêt et que l'inertage est activé (fig.2B), les vannes Va1, Va2 peuvent rester ouvertes mais le circuit de distribution anodique est mis en communication fluidique avec l'air ambiant. En revanche, les vannes Vc1, Vc2 sont fermées. La vanne Vr2 est ici fermée et la vanne Vr1 est ouverte, ce qui a l'avantage de réduite les pertes de charges dans le circuit de refroidissement (toutefois, la vanne Vr1 peut rester fermée et la vanne Vr2 rester ouverte). En revanche, la vanne Vic est ouverte, alors que la pompe 11 reste toujours activée. Aussi, la circulation du liquide caloporteur dans la ligne fluidique Lr provoque l'aspiration du gaz réactif présent dans le circuit de distribution cathodique, ici de l'air présent. Ce gaz réactif est alors retiré de la pile à combustible 2 lors de son arrêt (diminution de la concentration d'air), et on parle alors d'inertage. Le circuit de distribution cathodique est alors mis sous vide.

L'inertage, ici le retrait de l'air présent à la cathode de la pile à combustible 2, est effectué de manière simple, rapide et efficace, en mettant à profit l'écoulement du liquide caloporteur. Le dispositif fluidique d'inertage présente donc une architecture simplifiée du fait de la mutualisation des éléments fluidiques déjà présents, ainsi qu'une fiabilité élevée (pas de pièces mécaniques en mouvement) tout en étant compact, léger et peu onéreux.

L'inertage permet de réduire voire d'écarter les dégradations et inconvénients mentionnés précédemment (dégradation de la cathode lors de l'injection d'hydrogène au démarrage, présence d'hydrogène dans la pile à l'arrêt, dégradation de la membrane en cas de solidification de l'eau présente...). En effet, l'inertage peut consister à retirer l'air présent à la cathode de la pile à combustible et/ou l'hydrogène présent à l'anode. Il peut également se traduire par un assèchement partiel ou total de la membrane électrolytique de chaque cellule électrochimique.

Notons que la mise sous vide du circuit de distribution considéré peut se traduire par un taux de vide de près de 98% à la température de 20°C. En effet, la valeur atteinte est celle de la pression de vapeur saturante du liquide caloporteur (par exemple de l'eau) à la température de ce dernier. La pression de vapeur saturante de l'eau à 20°C est de 23 mbars, ce qui correspond au taux de vide de 98% environ.

Par ailleurs, le dispositif fluidique d'inertage peut être activé jusqu'à ce qu'un critère cible soit atteint. Ainsi, il est avantageux que l'inertage se traduise par une diminution de la pression partielle d'oxygène à la cathode (et éventuellement à l'anode le cas échéant) à au plus 50 mbars voire à au plus 10 mbars. On réduit ainsi fortement les risques de dégradation de la membrane de chaque cellule électrochimique lors du redémarrage de la pile à combustible, lors de l'injection d'hydrogène à l'anode (se traduisant par un front hydrogène/air à l'anode). Des capteurs de pression peuvent donc être prévus côté anode et côté cathode des cellules électrochimiques. On peut également mesurer la tension électrique des cellules électrochimiques, une valeur inférieure ou égale à 0.3V traduira une faible concentration en gaz réactif. Enfin, on peut également tenir compte de l'humidité résiduelle présente dans les circuits de distribution, selon que l'on souhaite conserver la membrane humide ou non. A ce titre, on peut définir un critère cible comme décrit notamment dans le document WO2009/133274.

Les figures 3A et 3B sont des vues schématiques et partielles d'un système électrochimique 1 selon une variante de mode de réalisation, lors de la phase de fonctionnement de la pile à combustible (fig.3A) et lors de la phase d'inertage (fig.3B).

Dans cet exemple, le dispositif fluidique d'inertage 20 se distingue de celui des fig.2A et 2B essentiellement en ce qu'il est adapté à retirer l'hydrogène de la pile à combustible 2. Pour cela, l'entrée secondaire de la trompe à eau est raccordée à la ligne fluidique anodique La par un conduit Cia. Dans cet exemple, elle est raccordée au conduit Ca1 en amont du circuit de distribution anodique, sur laquelle est située la vanne amont Va1. Le point de raccord est situé entre la vanne Va1 et l'entrée du circuit de distribution anodique. Comme précédemment, elle peut toutefois être raccordée au conduit aval Ca2 situé en aval du circuit de distribution anodique. Une vanne d'activation Via est située sur le conduit Cia en amont de l'entrée secondaire de la pile à combustible 2.

Lors de la phase de fonctionnement ('stabilisée') de la pile à combustible 2 (fig.3A), les vannes Va1, Va2 et Vc1, Vc2 sont ouvertes et permettent l'injection d'air et d'hydrogène dans la pile à combustible 2. Le liquide caloporteur circule dans la ligne fluidique Lr et dans la pile à combustible 2 pour la refroidir, et la chaleur reçue est ensuite évacuée par l'échangeur de chaleur 12. Pour cela, la vanne Vr1 est fermée et la vanne Vr2 est ouverte. Enfin, l'entrée secondaire de la trompe à eau 21 est fermée par la vanne Via, de sorte que le dispositif fluidique d'inertage 20 reste inactif.

Lors de la phase d'inertage (fig.3B), les vannes Va1 et Va2 sont fermées et la vanne Via d'activation de l'inertage est ouverte. La pompe 11 reste activée et le liquide caloporteur continue de s'écouler dans la ligne fluidique Lr et dans le circuit de refroidissement de la pile à combustible 2. Cet écoulement provoque l'aspiration de l'hydrogène présent dans le circuit de distribution anodique de la pile à combustible 2. Ainsi, on améliore la sécurité du stockage de la pile à combustible 2 lors de son arrêt dans la mesure où il n'y a pas d'hydrogène qui reste présent dans la pile. De plus, comme précédemment, la mise sous vide du circuit de distribution anodique peut s'accompagner d'un assèchement partiel ou total de la membrane électrolytique de chaque cellule électrochimique, ce qui permet de limiter sa dégradation lors d'un stockage de la pile dans des conditions de températures basses. De plus, comme précédemment, on améliore également ses performances lors du redémarrage dans la mesure où on limite la formation de cristaux de glace.

La figure 4A est une vue schématique et partielle d'un système électrochimique 1 selon une autre variante de mode de réalisation, lors de la phase d'inertage de la pile à combustible 2.

Dans cet exemple, la trompe à eau 21 est court-circuitée lors de la phase de fonctionnement de la pile à combustible 2. Ainsi, la ligne fluidique Lr comporte un conduit Cr1 raccordant la pompe 11 à l'entrée du circuit de refroidissement, ainsi qu'un conduit Cr2 sur lequel est disposée la trompe à eau 21. Ces deux conduits Cr1, Cr2 sont raccordés à la pompe 11 ici par une vanne trois voies Vr3.

Cela permet, lors de la phase de fonctionnement de la pile à combustible 2, d'éviter que le liquide caloporteur ne traverse la trompe à eau 21. On réduit ainsi les pertes de charge dans la ligne fluidique Lr et on réduit le coût énergétique lié à la circulation du liquide caloporteur.

De plus, le conduit Cr2 est raccordé à la sortie du circuit de refroidissement, ce qui permet, lors de la phase d'inertage, d'éviter de faire passer l'air aspiré dans la pile à combustible 2 côté cathode. On limite donc le risque de laisser des bulles d'air coincées dans le circuit de distribution cathodique, et on réduit également les pertes de charges.

En variante, il reste possible que la sortie de la trompe à eau 21 ne soit pas raccordée à la sortie du circuit de refroidissement via le conduit Cr2 comme dans la fig.4A, mais qu'elle soit raccordée à l'entrée du circuit de refroidissement (comme dans l'exemple des fig.2A et 2B). Ainsi, la trompe à eau 21 reste toujours court-circuitée lors de la phase de fonctionnement de la pile à combustible, mais cela induit que l'air aspiré traverse la pile à combustible 2 lors de la phase d'inertage.

La figure 4B est une vue schématique et partielle d'un système électrochimique 1 selon une autre variante de mode de réalisation, lors de la phase d'inertage de la pile à combustible 2.

Dans cet exemple, le dispositif fluidique d'inertage 20 est adapté à assurer l'aspiration de l'air situé dans le circuit de distribution cathodique, ainsi que celui de l'hydrogène situé dans le circuit de distribution anodique de la pile à combustible 2. Le retrait de ces deux gaz réactifs peut être effectué de manière simultanée ou séquentielle.

Pour cela, un conduit Cic assure le raccord de l'entrée secondaire de la trompe à eau 21 à la ligne fluidique cathodique Lc, ici au conduit Cc1, et une vanne d'activation Vic est située sur le conduit Cic. De plus, un conduit Cia assure le raccord de la même entrée secondaire de la trompe à eau à la ligne fluidique anodique La, ici au conduit de sortie anodique Ca2. La vanne Via est située sur ce conduit Cia. Bien entendu, d'autres configurations sont possibles, où il y aurait une seule vanne d'activation Vi et non pas deux, qui serait située entre l'entrée secondaire et le point de raccord entre les conduits Cic et Cia.

Ainsi, lors de l'inertage de la pile à combustible, on évite d'appliquer une différence de pression anode/cathode de part et d'autre de la membrane électrolytique de chaque cellule électrochimique. On réduit ainsi les risques de dégradations structurelles. Notons qu'un mélange gazeux hydrogène/oxygène est présent dans la ligne fluidique Lr, mais les risques d'ignition sont très faibles dans la mesure où ce mélange évolue dans un environnement liquide saturé en eau.

Des modes de réalisation particuliers viennent d'être décrits. Différentes variantes et modifications apparaîtront à l'homme du métier. Ainsi, le système électrochimique peut comporter deux pompes distinctes, l'une pour assurer la régulation thermique de la pile à combustible, et l'autre pour assurer l'inertage de la pile à combustible, avantageusement en complément de la première pompe en phase d'inertage, et éventuellement participer également, avec la première pompe, à réguler thermiquement la pile à combustible. En effet, lors de ces deux phases, les conditions de débit et de pertes de charge peuvent ne pas être identiques, et les pompes peuvent être dimensionnées en conséquence. En variante, il peut être prévu une seule pompe munie d'un variateur de vitesse pour adapter le débit d'écoulement du liquide caloporteur lors des phases de fonctionnement et d'inertage de la pile à combustible.

## Revendications

1. Système électrochimique (1), comportant :
∘ un réacteur électrochimique (2), comportant un circuit de distribution cathodique, un circuit de distribution anodique et un circuit de refroidissement ;
∘ une ligne fluidique cathodique (Lc) de circulation d'un premier fluide réactif, raccordée à une entrée et à une sortie du circuit de distribution cathodique ;
∘ une ligne fluidique anodique (La) de circulation d'un deuxième fluide réactif, raccordée à une entrée et à une sortie du circuit de distribution anodique ;
∘ un dispositif de régulation thermique (10), comprenant :
• une ligne fluidique de circulation (Lr) d'un liquide caloporteur, raccordée à une entrée et à une sortie du circuit de refroidissement ;
• une pompe (11) et un échangeur de chaleur (12), situés sur la ligne fluidique de circulation (Lr) ;
∘ **caractérisé en ce qu'**il comporte un dispositif d'inertage (20) d'au moins l'un des fluides réactifs, comportant :
• une trompe à eau (21), comportant une entrée principale et une sortie raccordées à la ligne fluidique de circulation (Lr), et une entrée secondaire raccordée à la ligne fluidique cathodique (Lc) et/ou à la ligne fluidique anodique (La) ;
• au moins une vanne d'activation (Vic, Via), située en amont de l'entrée secondaire, de sorte que, lors de l'ouverture de la vanne d'activation (Via, Vic), la circulation du liquide caloporteur dans la ligne fluidique de circulation (Lr) provoque l'aspiration du fluide réactif hors de la ligne fluidique considérée (Lc, La) et donc hors du réacteur électrochimique (2) ;
• dans lequel :
- la ligne fluidique cathodique (Lc) comporte un conduit amont (Cc1) raccordé à l'entrée du circuit de distribution cathodique et muni d'une vanne amont (Vc1), et un conduit aval (Cc2) raccordé à la sortie du circuit de distribution cathodique et muni d'une vanne aval (Vc2), l'entrée secondaire de la trompe à eau (21) étant raccordée au conduit amont (Cc1) ou au conduit aval (Cc2) de la ligne fluidique cathodique (Lc) par un conduit (Cic) muni d'une vanne d'activation (Vic) ; et/ou
- dans lequel la ligne fluidique anodique (La) comporte un conduit amont (Ca1) raccordé à l'entrée du circuit de distribution anodique et muni d'une vanne amont (Va1), et un conduit aval (Ca2) raccordé à la sortie du circuit de distribution anodique et muni d'une vanne aval (Va2), l'entrée secondaire de la trompe à eau (21) étant raccordée au conduit amont (Ca1) ou au conduit aval (Ca2) de la ligne fluidique anodique (La) par un conduit (Cia) muni d'une vanne d'activation (Via).

2. Système électrochimique (1) selon la revendication 1, dans lequel la sortie de la trompe à eau (21) est raccordée à l'entrée ou à la sortie du circuit de refroidissement.

3. Système électrochimique (1) selon l'une quelconque des revendications 1 à 2, dans lequel la ligne fluidique de circulation (Lr) comporte un premier conduit (Cr1) et un deuxième conduit (Cr2) en parallèle l'un de l'autre et raccordés à la pompe (11), la trompe à eau (21) étant situé sur le premier conduit (Cr1), et le deuxième conduit (Cr2) étant raccordé à l'entrée du circuit de refroidissement, les premier et deuxième conduits (Cr1, Cr2) étant munis d'au moins une vanne adaptée à assurer l'écoulement du liquide caloporteur dans le deuxième conduit (Cr2) lors d'une phase de fonctionnement du réacteur électrochimique (2), et dans le premier conduit (Cr1) lors d'une phase d'inertage.

4. Système électrochimique (1) selon l'une quelconque des revendications 1 à 3, comportant un évent (14) raccordé à la ligne fluidique de circulation (Lr) autorisant le dégazage du fluide présent dans la ligne fluidique de circulation (Lr).

5. Système électrochimique (1) selon l'une quelconque des revendications 1 à 4, dans lequel la ligne fluidique de refroidissement (Lr) comporte un conduit de dérivation en parallèle à l'échangeur de chaleur (12) associé à au moins une vanne (Vr1, Vr2) adaptée à assurer l'écoulement du liquide caloporteur dans l'échangeur de chaleur (12) lors d'une phase de fonctionnement du réacteur électrochimique (2), et l'écoulement du liquide caloporteur dans le conduit de dérivation lors d'une phase d'inertage.

6. Système électrochimique (1) selon l'une quelconque des revendications 1 à 5, dans lequel le réacteur électrochimique (2) est de type à membrane échangeuse de protons.

7. Système électrochimique (1) selon l'une quelconque des revendications 1 à 6, dans lequel le réacteur électrochimique (2) est une pile à combustible.

8. Système électrochimique (1) selon l'une quelconque des revendications 1 à 7, dans lequel les fluides réactifs sont des gaz.

9. Procédé d'utilisation du système électrochimique (1) selon l'une quelconque des revendications 1 à 8, comportant une phase de fonctionnement du réacteur électrochimique (2) dans laquelle la vanne d'activation (Vic, Via) est fermée, et une phase d'inertage dans laquelle la vanne d'activation (Vic, Via) est ouverte.

10. Procédé d'utilisation selon la revendication 9 du système électrochimique dont l'entrée secondaire de la trompe à eau (21) est raccordée à la ligne fluidique cathodique (Lc), dans lequel, lors de la phase d'inertage, les vannes (Vc1, Vc2) de la ligne fluidique cathodique (Lc) sont fermées.

11. Procédé d'utilisation selon la revendication 9 ou 10 du système électrochimique dont l'entrée secondaire de la trompe à eau (21) est raccordée à la ligne fluidique anodique (Lc), dans lequel, lors de la phase d'inertage, les vannes (Va1, Va2) de la ligne fluidique anodique (La) sont fermées.

## Patentansprüche

1. Elektrochemisches System (1), umfassend:
∘ einen elektrochemischen Reaktor (2), umfassend einen kathodischen Verteilungskreis, einen anodischen Verteilungskreis und einen Kühlkreis;
∘ eine kathodische Fluidleitung (Lc) zur Zirkulation eines ersten reaktiven Fluids, die an einen Einlass und an einen Auslass des kathodischen Verteilungskreises angeschlossen ist;
∘ eine anodische Fluidleitung (La) zur Zirkulation eines zweiten reaktiven Fluids, die an einen Einlass und an einen Auslass des anodischen Verteilungskreises angeschlossen ist;
∘ eine thermische Regulierungsvorrichtung (10), aufweisend:
• eine Zirkulationsfluidleitung (Lr) für eine Wärmeträgerflüssigkeit, die an einen Einlass und an einen Auslass des Kühlkreises angeschlossen ist;
• eine Pumpe (11) und einen Wärmetauscher (12), die an der Zirkulationsfluidleitung (Lr) gelegen sind;
∘ **dadurch gekennzeichnet, dass** es eine Inertisierungsvorrichtung (20) für mindestens eines der reaktiven Fluide umfasst, umfassend:
• eine Wasserstrahlpumpe (21), umfassend einen Haupteinlass und einen Auslass, die an die Zirkulationsfluidleitung (Lr) angeschlossen sind, und einen sekundären Einlass, der an die kathodische Fluidleitung (Lc) und/oder an die anodische Fluidleitung (La) angeschlossen ist;
• mindestens ein Aktivierungsventil (Vic, Via), das stromauf des sekundären Einlasses gelegen ist, so dass, beim Öffnen des Aktivierungsventils (Via, Vic), die Zirkulation der Wärmeträgerflüssigkeit in der Zirkulationsfluidleitung (Lr) das Ansaugen des reaktiven Fluids aus der betreffenden Fluidleitung (Lc, La) heraus und somit aus dem chemischen Reaktor (2) heraus bewirkt;
• wobei:
- die kathodische Fluidleitung (Lc) einen stromaufwärtigen Kanal (Cc1) umfasst, der an den Einlass des kathodischen Verteilungskreises angeschlossen ist und mit einem stromaufwärtigen Ventil (Vc1) versehen ist, und einen stromabwärtigen Kanal (Cc2), der an den Auslass des kathodischen Verteilungskreises angeschlossen ist und mit einem stromabwärtigen Ventil (Vc2) versehen ist, wobei der sekundäre Einlass der Wasserstrahlpumpe (21) an den stromaufwärtigen Kanal (Cc1) oder an den stromabwärtigen Kanal (Cc2) der kathodischen Fluidleitung (Lc) über einen Kanal (Cic) angeschlossen ist, der mit einem Aktivierungsventil (Vic) versehen ist; und/oder
- wobei die anodische Fluidleitung (La) einen stromaufwärtigen Kanal (Ca1) umfasst, der an den Einlass des anodischen Verteilungskreises angeschlossen ist und mit einem stromaufwärtigen Ventil (Va1) versehen ist, und einen stromabwärtigen Kanal (Ca2), der an den Auslass des anodischen Verteilungskreises angeschlossen ist und mit einem stromabwärtigen Ventil (Va2) versehen ist, wobei der sekundäre Einlass der Wasserstrahlpumpe (21) an den stromaufwärtigen Kanal (Ca1) oder an den stromabwärtigen Kanal (Ca2) der anodischen Fluidleitung (La) über einen Kanal (Cia) angeschlossen ist, der mit einem Aktivierungsventil (Via) versehen ist.

2. Elektrochemisches System (1) nach Anspruch 1, wobei der Auslass der Wasserstrahlpumpe (21) an den Einlass oder an den Auslass des Kühlkreises angeschlossen ist.

3. Elektrochemisches System (1) nach einem der Ansprüche 1 bis 2, wobei die Zirkulationsfluidleitung (Lr) einen ersten Kanal (Cr1) und einen zweiten Kanal (Cr2) umfasst, die parallel zueinander sind und an die Pumpe (11) angeschlossen sind, wobei die Wasserstrahlpumpe (21) an dem ersten Kanal (Cr1) gelegen ist, und wobei der zweite Kanal (Cr2) an den Einlass des Kühlkreises angeschlossen ist, wobei die ersten und zweiten Kanäle (Cr1, Cr2) mit mindestens einem Ventil versehen sind, das geeignet ist, das Fließen der Wärmeträgerflüssigkeit in den zweiten Kanal (Cr2) bei einer Betriebsphase des elektrochemischen Reaktors (2) und in den ersten Kanal (Cr1) bei einer Inertisierungsphase zu gewährleisten.

4. Elektrochemisches System (1) nach einem der Ansprüche 1 bis 3, umfassend einen an die Zirkulationsfluidleitung (Lr) angeschlossenen Abzug (14), der das Entgasen des in der Zirkulationsfluidleitung (Lr) vorhandenen Fluids zulässt.

5. Elektrochemisches System (1) nach einem der Ansprüche 1 bis 4, wobei die Kühlfluidleitung (Lr) einen zu dem Wärmetauscher (12) parallelen Bypasskanal umfasst, der mindestens einem Ventil (Vr1, Vr2) zugeordnet ist, das geeignet ist, das Fließen der Wärmeträgerflüssigkeit in den Wärmetauscher (12) bei einer Betriebsphase des elektrochemischen Reaktors (2) und das Fließen der Wärmeträgerflüssigkeit in den Bypasskanal bei einer Inertisierungsphase zu gewährleisten.

6. Elektrochemisches System (1) nach einem der Ansprüche 1 bis 5, wobei der elektrochemische Reaktor (2) vom Typ mit Protonenaustauschmembran ist.

7. Elektrochemisches System (1) nach einem der Ansprüche 1 bis 6, wobei der elektrochemische Reaktor (2) eine Brennstoffzelle ist.

8. Elektrochemisches System (1) nach einem der Ansprüche 1 bis 7, wobei die reaktiven Fluide Gase sind.

9. Verfahren zur Verwendung des elektrochemischen Systems (1) nach einem der Ansprüche 1 bis 8, umfassend eine Betriebsphase des elektrochemischen Reaktors (2), in der das Aktivierungsventil (Vic, Via) geschlossen ist, und eine Inertisierungsphase, in der das Aktivierungsventil (Vic, Via) geöffnet ist.

10. Verfahren zur Verwendung des elektrochemischen Systems nach Anspruch 9, wobei der sekundäre Einlass der Wasserstrahlpumpe (21) an die kathodische Fluidleitung (Lc) angeschlossen ist, wobei bei der Inertisierungsphase die Ventile (Vc1, Vc2) der kathodischen Fluidleitung (Lc) geschlossen sind.

11. Verfahren zur Verwendung des elektrochemischen Systems nach Anspruch 9 oder 10, wobei der sekundäre Einlass der Wasserstrahlpumpe (21) an die anodische Fluidleitung (Lc) angeschlossen ist, wobei bei der Inertisierungsphase die Ventile (Va1, Va2) der anodischen Fluidleitung (La) geschlossen sind.

## Claims

1. Electrochemical system (1) comprising:
∘ an electrochemical reactor (2) having a cathode distribution circuit, an anode distribution circuit and a cooling circuit;
∘ a cathode fluid line (Lc) for circulation of a first reaction fluid, connected to an inlet and to an outlet of the cathode distribution circuit;
∘ an anode fluid line (La) for circulation of a second reaction fluid, connected to an inlet and to an outlet of the anode distribution circuit;
∘ a thermal regulation device (10) comprising:
• a fluid line for circulation (Lr) of a heat-transfer liquid, connected to an inlet and to an outlet of the cooling circuit;
• a pump (11) and a heat exchanger (12), which are situated on the fluid line of circulation (Lr);
∘ **characterized in that** it comprises an inerting device (20) for rendering at least one of the reaction fluids inert, having:
• a water suction device (21) having a main inlet and an outlet which are connected to the fluid line of circulation (Lr), and a secondary inlet connected to the cathode fluid line (Lc) and/or to the anode fluid line (La);
• at least one activation valve (Vic, Via) situated upstream of the secondary inlet, such that, while the activation valve (Vic, Via) is open, the circulation of the heat-transfer liquid in the fluid line of circulation (Lr) causes the reaction fluid to be drawn out of the fluid line (Lc, La) in question and thus out of the electrochemical reactor (2);
• wherein:
- the cathode fluid line (Lc) has an upstream conduit (Cc1) connected to the inlet of the cathode distribution circuit and provided with an upstream valve (Vc1), and a downstream conduit (Cc2) connected to the outlet of the cathode distribution circuit and provided with a downstream valve (Vc2), the secondary inlet of the water suction device (21) being connected to the upstream conduit (Cc1) or to the downstream conduit (Cc2) of the cathode fluid line (Lc) by a conduit (Cic) provided with an activation valve (Vic); and/or
- wherein the anode fluid line (La) has an upstream conduit (Ca1) connected to the inlet of the anode distribution circuit and provided with an upstream valve (Va1), and a downstream conduit (Ca2) connected to the outlet of the anode distribution circuit and provided with a downstream valve (Va2), the secondary inlet of the water suction device (21) being connected to the upstream conduit (Ca1) or to the downstream conduit (Ca2) of the anode fluid line (La) by a conduit (Cia) provided with an activation valve (Via).

2. Electrochemical system (1) according to Claim 1, wherein the outlet of the water suction device (21) is connected to the inlet or to the outlet of the cooling circuit.

3. Electrochemical system (1) according to either one of Claims 1 and 2, wherein the fluid line of circulation (Lr) has a first conduit (Cr1) and a second conduit (Cr2) which are mutually parallel and are connected to the pump (11), the water suction device (21) being situated on the first conduit (Cr1), and the second conduit (Cr2) being connected to the inlet of the cooling circuit, the first and second conduits (Cr1, Cr2) being provided with at least one valve designed to ensure the flow of the heat-transfer liquid in the second conduit (Cr2) during an operating phase of the electrochemical reactor (2), and in the first conduit (Cr1) during an inerting phase.

4. Electrochemical system (1) according to any one of Claims 1 to 3, comprising a vent (14) which is connected to the fluid line of circulation (Lr) and makes it possible to degas the fluid present in the fluid line of circulation (Lr).

5. Electrochemical system (1) according to any one of Claims 1 to 4, wherein the fluid line of cooling (Lr) has a bypass conduit which is parallel to the heat exchanger (12) and is associated with at least one valve (Vr1, Vr2) designed to ensure the flow of the heat-transfer liquid in the heat exchanger (12) during an operating phase of the electrochemical reactor (2), and the flow of the heat-transfer liquid in the bypass conduit during an inerting phase.

6. Electrochemical system (1) according to any one of Claims 1 to 5, wherein the electrochemical reactor (2) is of the proton exchange membrane type.

7. Electrochemical system (1) according to any one of Claims 1 to 6, wherein the electrochemical reactor (2) is a fuel cell.

8. Electrochemical system (1) according to any one of Claims 1 to 7, wherein the reaction fluids are gases.

9. Method for using the electrochemical system (1) according to any one of Claims 1 to 8, comprising an operating phase of the electrochemical reactor (2) in which the activation valve (Vic, Via) is closed, and an inerting phase in which the activation valve (Vic, Via) is open.

10. Method for using, according to Claim 9, the electrochemical system of which the secondary inlet of the water suction device (21) is connected to the cathode fluid line (Lc), wherein, during the inerting phase, the valves (Vc1, Vc2) of the cathode fluid line (Lc) are closed.

11. Method for using, according to Claim 9 or 10, the electrochemical system of which the secondary inlet of the water suction device (21) is connected to the anode fluid line (Lc), wherein, during the inerting phase, the valves (Va1, Va2) of the anode fluid line (La) are closed.
